Europäisches Patentamt

European Patent Office

Office européen des brevets

(11) Numéro de publication: **0 272 944 B1**

# (12) FASCICULE DE BREVET EUROPEEN

(45) Date de publication de fascicule du brevet:
04.09.91

(51) Int. Cl.⁵: **G21C 17/10**

(21) Numéro de dépôt: **87402328.6**

(22) Date de dépôt: **16.10.87**

(54) **Conduit de support et de positionnement de dispositifs de mesure dans le coeur d'un réacteur nucléaire.**

(30) Priorité: **26.11.86 FR 8616505**

(43) Date de publication de la demande:
**29.06.88 Bulletin 88/26**

(45) Mention de la délivrance du brevet:
**04.09.91 Bulletin 91/36**

(84) Etats contractants désignés:
**BE CH DE ES GB LI SE**

(56) Documents cités:
**FR-A- 2 081 077**
**FR-A- 2 094 195**
**FR-A- 2 377 078**
**US-A- 4 012 282**

(73) Titulaire: **FRAMATOME**
**Tour Fiat 1, Place de la Coupole**
**F-92400 Courbevoie(FR)**

(72) Inventeur: **Feurgard, René**
**11 Les Passereaux Domaine Saint François**
**d'Assise**
**F-78170 La Celle Saint Cloud(FR)**

(74) Mandataire: **Bouget, Lucien et al**
**Cabinet Lavoix 2, Place d'Estienne d'Orves**
**F-75441 Paris Cédex 09(FR)**

## Description

L'invention concerne un conduit de support et de positionnement de dispositifs de mesure dans le coeur d'un réacteur nucléaire.

Dans l'exploitation des réacteurs nucléaires tels que les réacteurs nucléaires à eau sous pression, il est nécessaire d'effectuer des mesures dans le coeur constitué par les assemblages combustibles, pendant le fonctionnement du réacteur. Il est en particulier nécessaire d'effectuer des mesures de flux neutronique à différents endroits suivant la hauteur du coeur pour connaître le répartition de flux neutronique ou de puissance, suivant la direction axiale du coeur qui correspond généralement à la direction verticale.

Selon le document FR-A-2 081 077 les assemblages combustibles constituant le coeur comportent à leur partie centrale un tube d'instrumentation dans lequel on peut introduire, sur toute la hauteur du coeur, un doigt de gant étanche à l'intérieur duquel on déplace une sonde de mesure de flux neutronique, pendant le fonctionnement du réacteur. Les doigts de gant associés à chacun des assemblages combustibles dans lesquels on réalise des mesures de flux doivent pouvoir être extraits de ces assemblages, par exemple lorsqu'on effectue le rechargement du coeur. Ces doigts de gant sont donc montés mobiles par glissement à l'intérieur de tubes de guidage joignant la partie inférieure de la cuve à une salle de mesure dans laquelle les extrémités des doigts de gant opposées aux extrémités introduites dans le coeur sont accessibles pour le déplacement des sondes, pour le recueil des signaux de mesure et pour le déplacement des doigts de gant à l'intérieur des tubes de guidage. Le déplacement des doigts de gant dans les tubes de guidage se fait par simple poussée ou traction, un jeu suffisant étant prévu pour limiter les efforts à exercer sur le doigt de gant, malgré la forme courbe des tubes de guidage sur la plus grande partie de leur parcours.

En plus des sondes mobiles de mesure du flux neutronique, on utilise également un ensemble de dispositifs de mesure de flux tels que des collectrons placés en position fixe dans le coeur et à différents niveaux suivant sa hauteur.

Il est également nécessaire d'utiliser, pendant le fonctionnement du réacteur, des dispositifs de mesure de température, de pression ou de niveau qui sont mis en place dans le coeur en différents emplacements déterminés.

Dans le but de simplifier l'instrumentation du coeur ainsi que les procédures d'utilisation et d'entretien de cette instrumentation, on a proposé de placer l'ensemble des dispositifs de mesure relatifs à un assemblage du coeur dans lequel on réalise des mesures à l'intérieur d'un conduit de support et de positionnement étanche et conçu d'une manière analogue aux doigts de gant recevant la sonde mobile. Un tel conduit comporte une enveloppe tubulaire externe dans laquelle est montée en position centrale et coaxialement à l'enveloppe une gaine ou doigt de gant permettant le guidage d'une sonde mobile de mesure du flux neutronique.

Des dispositifs de mesure tels que des collectrons sont placés dans le conduit, autour de la gaine centrale et en des positions fixes réparties suivant la longueur du conduit. Le conduit de support et de positionnement des dispositifs de mesure présente un diamètre un peu inférieur au diamètre d'un tube de guidage permettant son déplacement et joignant la partie inférieure de la cuve à la salle de mesure. Le conduit peut être mis en place dans le coeur ou extrait du coeur, depuis la salle de mesure, par simple poussée ou traction sur son extrémité. On peut ainsi réaliser la mise en place ou l'extraction de l'ensemble des dispositifs de mesure et du doigt de gant dans lequel se déplace la sonde mobile. Il est bien sûr nécessaire d'utiliser un doigt de gant central et une sonde de mesure de flux neutronique miniaturisés par rapport à la technique antérieure, les tubes d'instrumentation des assemblages étant les mêmes que ceux qui étaient destinés à recevoir les seuls doigts de gant. De même, les passages réservés au conduit de support et de positionnement des dispositifs de mesure dans les structures internes de la cuve du réacteur, entre le fond de cuve et la base du coeur, ainsi que les tubes de guidages sont les mêmes que ceux qui étaient utilisés pour le guidage des seuls doigts de gant.

Ces conduits ou cannes de mesure doivent présenter une flexibilité suffisante pour pouvoir être déplacés sans effort excessif par poussée et par traction à l'intérieur des tubes de guidage cintrés joignant la salle de mesure au fond de cuve. L'enveloppe externe de ces conduits ou cannes de mesure doit d'autre part supporter des efforts importants, dans un fluide à haute température et haute pression et sous irradiation. Cette enveloppe externe étanche doit en particulier résister à la pression de l'eau de refroidissement primaire qui s'exerce sur sa paroi pendant le fonctionnement du réacteur.

Il est donc très difficile de concevoir une enveloppe externe qui présente à la fois des propriétés de flexibilité suffisantes pour être déplacée aisément dans les tubes de guidage et des propriétés de résistance mécanique satisfaisantes dans les conditions d'utilisation régnant dans le réacteur nucléaire. En particulier, il est très difficile de trouver un matériau qui puisse présenter des caractéristiques suffisantes pour constituer une enveloppe tubulaire mince subissant de fortes contraintes mécaniques dans la cuve du réacteur et dans les tubes de guidage.

Les difficultés de construction du conduit de mesure sont encore accrues par le fait que ce conduit doit permettre la mise en place d'une gaine ou doigt de gant dans sa partie centrale et de dispositifs de mesure, en position fixe et répartis suivant sa longueur autour de la gaine centrale.

En outre, certaines mesures telles que les mesures de température, de pression ou de niveau de liquide dans le coeur du réacteur sont très difficiles à réaliser dans de bonnes conditions ou même impossibles, en utilisant des moyens de mesure séparés du fluide primaire du réacteur par une paroi continue.

Le but de l'invention est donc de proposer un conduit de support et de positionnement de dispositifs de mesure dans le coeur d'un réacteur nucléaire monté mobile dans un tube de guidage joignant la cuve du réacteur dans laquelle est placé le coeur à un local de mesure et comportant une enveloppe tubulaire externe, une gaine centrale disposée coaxialement à l'intérieur de l'enveloppe pour le guidage d'une sonde mobile de mesure de flux neutronique, des dispositifs de mesure placés dans l'enveloppe tubulaire, autour de la gaine centrale, en des positions fixes réparties suivant la longueur du conduit, et des conducteurs s'étendant suivant la longueur du conduit et reliés aux dispositifs de mesure, ce conduit possèdant à la fois une souplesse suffisante pour être déplacé aisément dans le tube de guidage et une résistance mécanique satisfaisante dans les conditions d'utilisation du réacteur et permettant de réaliser des mesures d'un grand nombre de paramètres physiques dans de bonnes conditions et dans des positions bien déterminées, tout en étant d'une structure simple et facile à concevoir et à réaliser.

Dans ce but, l'enveloppe tubulaire externe comporte une pluralité de pièces de forme tubulaire ou entretoises usinées intérieurement chacune pour recevoir un ensemble de dispositifs de mesure placé dans une position déterminée suivant la longueur du conduit et des tronçons successifs de tube souple dont un tronçon initial ayant une première extrémité destinée à venir dans le local de mesure et une seconds extrémité reliée à une première entretoise, des tronçons intermédiaires reliant chacun deux entretoises successives et un tronçon final prolongeant le conduit au-delà de l'entretoise la plus éloignée du tronçon initial, ouvert à son extrémité libre, l'enveloppe tubulaire comportant de plus des ouvertures dans sa paroi latérale réparties dans des zones espacées suivant sa longueur.

Afin de bien faire comprendre l'invention, on va maintenant décrire, à titre d'exemple non limitatif, en se référant aux figures jointes en annexe, un mode de réalisation d'un conduit de mesure suivant l'invention.

La figure 1 est une vue schématique en coupe et en élévation de la partie inférieure d'une cuve de réacteur nucléaire à eau sous pression et d'un local de mesure disposé latéralement et au voisinage du fond de cuve.

La figure 2 est une vue en coupe du dispositif de traversée étanche du conduit de mesure, à son entrée dans la salle de mesure.

La figure 3 est une vue en perspective du tronçon initial et de la première entretoise d'un conduit de mesure suivant l'invention.

La figure 4 est une vue en perspective d'une entretoise du conduit de mesure suivant l'invention.

La figure 5 est une vue latérale avec coupe partielle de l'entretoise représentée sur la figure 4.

La figure 6 est une vue d'une extrémité de l'entretoise suivant F de la figure 5.

La figure 6a est une vue en coupe analogue à la figure 6, d'une variante de réalisation du conduit suivant l'invention.

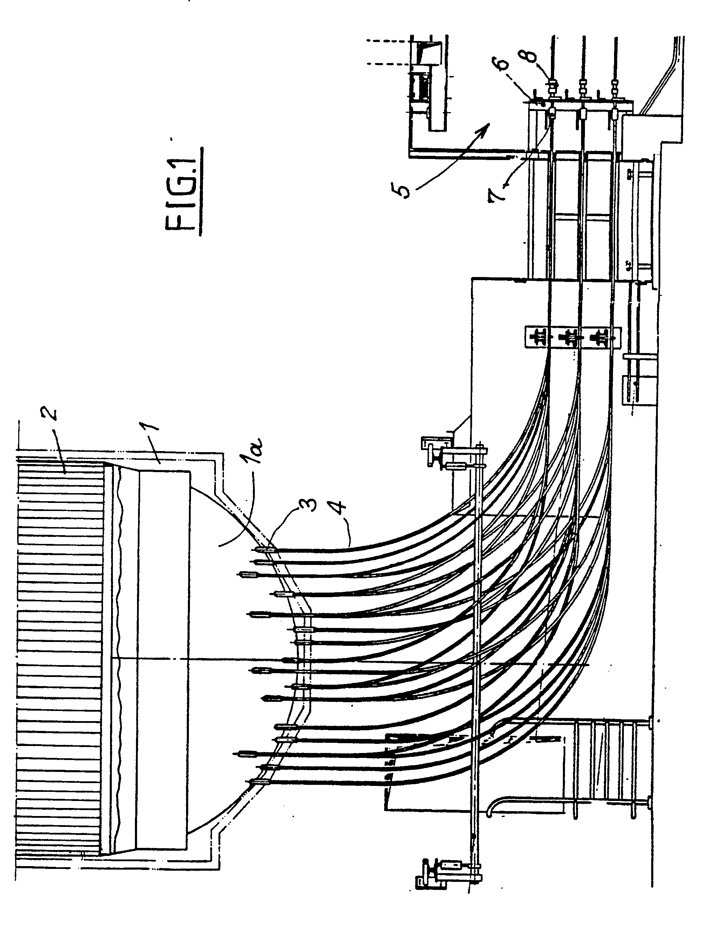

Sur la figure 1, on voit le fond 1a de la cuve 1 d'un réacteur nucléaire à eau sous pression renfermant le coeur 2 du réacteur constitué par des assemblages combustibles. Le fond 1a de la cuve est traversé par des manchettes 3 à chacune desquelles est raccordé un tube 4 permettant le guidage d'un conduit de mesure. Les tubes de guidage 4 sont cintrés puis dirigés sous forme de nappes horizontales successives vers un local de mesure 5 disposé à un niveau inférieur au niveau du fond de cuve 1a et latéralement par rapport à la cuve 1. Chacun des conduits de guidage 4 pénètre dans le local de mesure 5 puis est raccordé, au niveau d'une paroi de support 6, à une vanne d'isolement 7 et à une buselure d'étanchéité 8 successivement.

La vanne 7 permet de fermer de façon totalement étanche l'extrémité du tube de guidage 4, lorsque le conduit de mesure correspondant a été totalement extrait.

La buselure 8 comporte des dispositifs d'étanchéité permettant de faire sortir de façon étanche du tube de guidage, le tronçon initial du conduit de mesure.

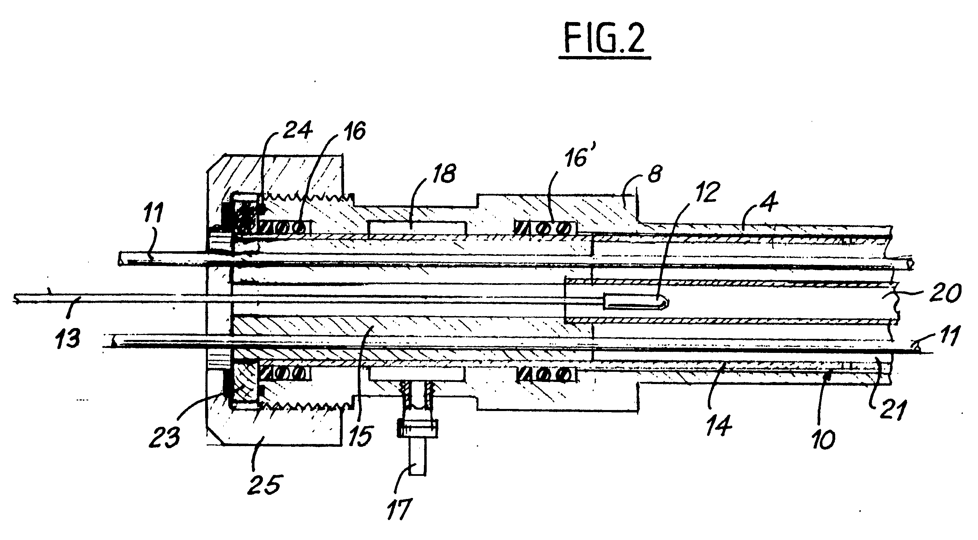

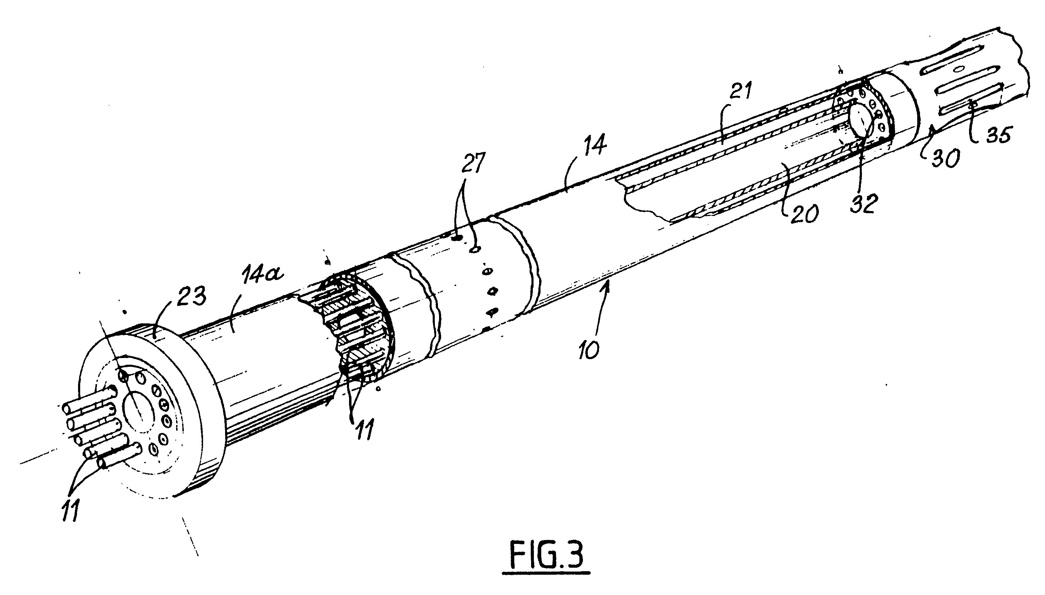

Comme il est visible sur les figures 2 et 3, ce tronçon initial du conduit de mesure 10 débouchant dans le local 5 permet de recueillir les signaux provenant de la sonde mobile de mesure du flux neutronique 12 et des dispositifs de mesure placés en position fixe dans le conduit 10, grâce à des conducteurs 11 parcourant le conduit 10 suivant sa longueur. On peut également assurer le déplacement de la sonde 12 qui est fixée à l'extrémité d'un câble semi-rigide 13, depuis le local 5.

Comme il est visible sur la figure 2, la buselure 8 est fixée à l'extrémité du conduit de guidage 4 pénétrant dans le local 5. Le conduit 10 a été représenté dans sa position de service, entièrement engagé à l'intérieur de la buselure 8 et du tube de guidage 4.

Le conduit de mesure désigné de façon générale par le repère 10 comporte une enveloppe externe 14 constituée, au niveau du tronçon initial, par un tube mince en alliage de zirconium dont le diamètre extérieur est un peu inférieur au diamètre intérieur du tube de guidage 4. L'extrémité du tube 14 est engagée dans la buselure 8 à l'intérieur de laquelle des joints d'étanchéité 16 et 16' sont disposés dans deux gorges espacées suivant la longueur de la buselure 8. Les joints d'étanchéité 16 et 16' sont en contact avec la surface extérieure du tube 14 et assurent une jonction étanche entre le tube 14 et la buselure 8. Les joints 16 et 16' sont des joints d'étanchéité glissants permettant un déplacement du tube 14, dans la direction axiale, à l'intérieur de la buselure 8, tout en maintenant l'étanchéité. Entre les joints 16 et 16', la buselure 8 constitue une chambre annulaire 18 reliée par un ajutage 17 à un circuit d'eau sous pression.

A l'extrémité de l'enveloppe tubulaire 14 engagée dans la buselure 8, est inséré un manchon tubulaire 15 qui est fixé par soudure à l'intérieur de l'enveloppe 14. La gaine ou doigt de gant 20 dans laquelle se déplace la sonde mobile 12 est fixée à son extrémité sur le manchon 15. Cette gaine 20 est disposée à la partie centrale et suivant l'axe du conduit de mesure 10. Le diamètre de la gaine 20 est tel qu'un espace annulaire 21 est ménagé entre la surface extérieure de la gaine 20 et la surface intérieure de l'enveloppe 14 du conduit 10.

Le manchon 15 est percé d'ouvertures permettant le passage des conducteurs 11 vers le local 5, les conducteurs 11 étant toutefois fixés de façon étanche dans les ouvertures de passage, pour maintenir l'espace annulaire 21 totalement isolé du local 5.

L'enveloppe tubulaire 14 est également solidaire à son extrémité d'un flasque 23 venant en appui sur l'extrémité de la buselure 8, avec interposition d'un joint d'étanchéité 24, lorsque le conduit de mesure est dans sa position représentée sur la figure 2. Le conduit 10 est maintenu dans cette position grâce à un écrou 25 vissé sur une partie filetée de la buselure 8.

La position du conduit de mesure 10 représentée sur la figure 2 correspond à la position du conduit de mesure totalement inséré dans le coeur du réacteur. Dans cette position, le doigt de gant 20 situé à la partie centrale du conduit de mesure s'étend sur toute la hauteur du coeur et les dispositifs de mesure placés en position fixe suivant la longueur du conduit de mesure dans l'espace annulaire 21 sont répartis à intervalle régulier, sur toute la hauteur du coeur.

Il est alors possible d'effectuer des mesures de flux neutronique sur toute la hauteur du coeur grâce à la sonde 12 mobile à l'intérieur du conduit 20. On peut également obtenir en continu des mesures de paramètres physiques ou de flux neutronique à différentes hauteurs dans le coeur grâce aux dispositifs de mesure reliés à l'extrémité des conducteurs 11.

Sur les figures 2 et 3, on voit que la partie initiale 14a de l'enveloppe tubulaire 14, jusqu'au niveau du joint 16', est totalement isolée par rapport au volume intérieur du conduit de guidage 4 qui est lui-même en communication avec l'intérieur de la cuve 1 du réacteur et qui renferme de l'eau sous pression. Cette partie initiale 14a de l'enveloppe du conduit de mesure 10 est appelée partie sèche, puisqu'elle ne vient jamais en contact avec l'eau sous pression du réacteur.

Sur la figure 3, on voit qu'au-delà de la partie sèche 14a, l'enveloppe tubulaire 14 se prolonge jusqu'à une première entretoise tubulaire 30 à l'intérieur de laquelle sont fixés des dispositifs de mesure 32 disposés autour de la gaine centrale 20, dans l'espace annulaire 21. Les conducteurs 11 permettent d'alimenter ces dispositifs de mesure 32 en courant électrique et/ou de transmettre et de recueillir les signaux de mesure en continu.

La partie du conduit de mesure entre son flasque d'extrémité 23 et la première entretoise 30 constitue le tronçon initial réalisé sous la forme d'un tube mince en alliage de zirconium à l'intérieur duquel est placée en position centrale la gaine 20, au-delà de la partie sèche 14a.

L'enveloppe externe 14 du tronçon initial du conduit 10 est percé d'ouvertures 27 réparties à sa périphérique suivant une zone annulaire située à une distance de l'extrémité du conduit 10 débouchant dans le local 5, de l'ordre de quatre mètres, c'est-à-dire une distance équivalent à la hauteur du coeur. Les trous 27 mettent en communication l'espace annulaire 21 du conduit avec le volume intérieur du tube de guidage 4 rempli d'eau sous pression.

Lorsque le conduit 10 est dans sa position totalement insérée dans le coeur, comme représenté sur la figure 2, la première entretoise 30 est en position fixe dans la partie basse du coeur et les dispositifs de mesure 32 permettent de mesurer le flux neutronique, certains de ces dispositifs étant des collectrons et divers paramètres physiques tels que la température, la pression ou le niveau du fluide primaire.

Une des caractéristiques essentielles du conduit de mesure suivant l'invention est en effet que sa partie interne, autour de la gaine centrale 20, constituant l'espace annulaire 21, est remplie d'eau primaire en équilibre de pression et de température avec l'eau remplissant la cuve 1. L'enveloppe tubulaire 14 est donc en équipression et ne subit pas de contrainte de la part de l'eau primaire sous pression. Cette équipression est obtenue, dans le tronçon initial du conduit 10, grâce aux ouvertures 27 et à d'autres ouvertures semblables traversant l'enveloppe 14, réparties suivant la longueur du conduit.

Pour procéder à un rechargement du coeur du réacteur, la cuve étant dépressurisée et ouverte, il est nécessaire d'extraire l'ensemble du conduit de mesure du coeur, par traction sur son extrémité débouchant dans le local de mesure 5. Lors de l'extraction du conduit de mesure 10 sur une longueur voisine de quatre mètres, les trous 27 traversant l'enveloppe tubulaire 14 viennent en concordance avec la chambre annulaire 18 de la buselure 8. Il est alors possible en utilisant le circuit d'eau sous pression relié à l'ajutage 17 de contrôler la circulation interne dans l'espace annulaire 21 du conduit de mesure, pour vérifier si des bouchages n'ont pas réduit les possibilités de circulation de l'eau sous pression dans cet espace.

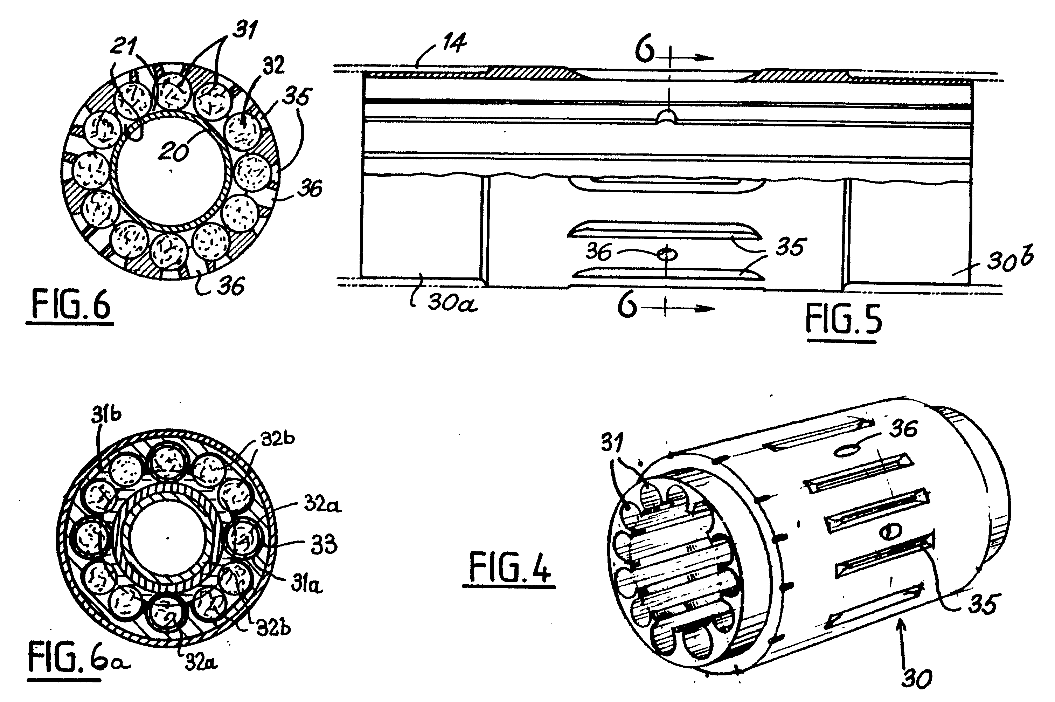

L'ensemble du conduit de mesure 10 est constitué par une succession de tronçons tubulaires souples et flexibles séparés par des entretoises 30 rigides et de longueur faible qui seront décrites en se référant aux figures 4, 5 et 6. La gaine 20 constituant la partie centrale du conduit de mesure est disposée coaxialement à l'enveloppe 14 sur toute la longueur de cette enveloppe et se trouve fermée à son extrémité en constituant un doigt de gant dont le volume intérieur totalement isolé du fluide primaire remplissant la cuve et le tube de guidage est en communication directe à son extrémité avec le local de mesure 5.

L'enveloppe externe 14 du conduit 10 comporte, à la suite du tronçon initial qui a été décrit en se référant à la figure 3, trois tronçons intermédiaires disposés chacun entre deux entretoises successives et un tronçon final prolongeant la dernière entretoise, c'est-à-dire l'entretoise la plus éloignée de l'extrémité du conduit située dans le local de mesure 5, ce tronçon final est ouvert à son extrémité qui est plongée, en service, dans l'eau primaire du réacteur nucléaire.

L'ensemble du conduit de mesure comporte quatre entretoises séparées par des tronçons intermédiaires de l'enveloppe externe 14 d'une longueur voisine d'un mètre. Les dispositifs de mesure en position fixe dans le conduit 10 et fixés sur les entretoises 30, à leur partie interne, sont ainsi répartis dans quatre zones du coeur régulièrement espacées suivant sa hauteur.

Sur les figures 4, 5 et 6, on voit une entretoise 30 constituant l'un des éléments de l'enveloppe externe tubulaire 14 du conduit 20. Une telle entretoise est constituée par un manchon rigide en alliage de zirconium à l'intérieur duquel sont usinés douze logements 31 en forme de demi-cylindres. De manière générale, on pourra prévoir de huit à douze logements dans chacune des entretoises 30. Chacun des logements 31, comme il est visible sur la figure 6, reçoit un dispositif de mesure ou capteur 32 de forme cylindrique qui est disposé et fixé dans l'entretoise 30 et sur toute sa longueur.

Sur la figure 6a, on a représenté une variante de réalisation de l'entretoise. Au lieu de logements identiques 31, l'entretoise comporte à sa partie interne, quatre logements 31a à section circulaire et quatre logements 31b dont la section permet la disposition de deux capteurs placés côte à côte. On remarquera que les dispositifs de mesure 32a sont placés chacun dans un tube 33 lui-même fixé dans l'entretoise. Ce tube 33 est fermé à son extrémité qui se trouve, en service, dans le coeur du réacteur et encastré et soudé dans le manchon 15 (Figure 2) à son autre extrémité. Les capteurs 32a sont ainsi isolés de l'eau sous pression du réacteur alors que la surface externe du tube 33 est en contact avec l'eau et donc soumise à la pression. Il peut être en effet avantageux d'isoler certaines capteurs de l'eau de refroidissement du réacteur. A l'inverse, les capteurs 32b sont en contact direct avec l'eau de refroidissement à l'intérieur des logements doubles 31b dont la forme assure un meilleur mouillage et une mise en contact avec l'eau sur une plus grande proportion de la surface du capteur.

Les dispositifs de mesure 32, 32a, 32b placés dans une entretoise 30 les uns à la suite des autres à la périphérie interne de cette entretoise, ont des fonctions différentes et sont constituées par des collectrons permettant la mesure du flux neutronique, des thermocouples, des transducteurs thermiques, des capteurs acoustiques, des capteurs de niveau ou d'autres dispositifs de mesure de paramètres physiques ou neutroniques dans le coeur. Certains dispositifs peuvent être présents en plusieurs exemplaires afin de fournir des mesures rendondantes. Certains logements 31 peuvent être vides et réservés pour l'implantation de nouveaux capteurs qui s'avèreraient nécessaires. D'autres logements sont également réservés au passage des conducteurs de liaison 11.

Lorsque les dispositifs de mesure 32 sont en place dans l'entretoise 30, l'espace réservé à la partie centrale de l'entretoise est suffisant pour permettre le logement de la gaine 20 de la sonde de mesure mobile. On a représenté sur la figure 6 l'emplacement de la gaine, au centre de l'entretoise, cette gaine 20 étant maintenue en place au centre de l'entretoise et donc du conduit de mesure 10 par les dispositifs de mesure 32 eux-mêmes.

L'entretoise 30 est usinée sur sa surface périphérique pour constituer douze encoches 35 débouchant chacune dans le fond d'un logement semi-cylindrique 31 recevant un dispositif de mesure 32. Lorsque les dispositifs de mesure 32 sont en place dans les logements 31, leur fixation sur l'entretoise est assurée par soudage ou agrafage, le métal d'apport de la soudure étant coulé à l'intérieur des encoches 35.

Des trous 36 traversant la paroi latérale de l'entretoise 30 pour déboucher dans l'espace annulaire 21 entre l'entretoise et la gaine 20 sont de plus prévus entre les encoches 35, au milieu d'un espace sur deux séparant ces encoches. Les six trous 36 ainsi obtenus ont d'une part le même rôle que les trous 27 pratiqués dans la paroi du tronçon initial du conduit 10 et permettent une mise en équipression de l'enveloppe externe du conduit 10 au niveau des entretoises et d'autre part, permettent de favoriser un bon mouillage de la partie intérieure de l'entretoise et en particulier les dispositifs de mesure 32 et 32a qui sont conçus pour venir en contact avec l'eau, à l'inverse des dispositifs de mesure 32b qui comportent un tube externe 33 isolant le capteur de la phase liquide. Les espaces réservés entre les divers éléments du conduit 10 sont en effet de très faible épaisseur et un bon mouillage de ces éléments ne peut être assuré qu'en prévoyant un nombre suffisant d'orifices suivant la longueur du conduit et en particulier au niveau des entretoises.

Ainsi qu'il est visible sur la figure 5, chacune des entretoises comporte deux parties d'extrémité 30a et 30b permettant l'engagement et la fixation par soudure d'un tube en alliage de zirconium constituant la partie courante de l'enveloppe externe du conduit 10 et réalisant la liaison entre les entretoises 30 successives.

Les conducteurs 11 d'alimentation et de recueil des signaux des dispositifs de mesure 32 sont disposés suivant une famille d'hélices, sur toute la longueur du conduit 10, dans l'espace annulaire 21, entre la gaine centrale 20 et l'enveloppe externe 14. Au niveau des entretoises, les conducteurs 11 sont disposés et agrafés dans les parties libres de cet espace, entre les dispositifs de mesure 32. Les conducteurs 11 peuvent également passer dans les logements 31 qui ne reçoivent pas de dispositif de mesure.

Dans le cas d'un tube de guidage d'un réacteur nucléaire à eau sous pression, le conduit de mesure a un diamètre extérieur de l'ordre de 9 mm et la gaine centrale ou doigt de gant de la sonde mobile de mesure neutronique, un diamètre extérieur de l'ordre de 4,5 mm. Les dispositifs de mesure miniaturisés disposés dans les entretoises ont un diamètre de l'ordre de 1,5 mm et les conducteurs 11, un diamètre de l'ordre de 1 mm. Le tube souple en alliage de zirconium constituant les parties de l'enveloppe externe 14 du conduit de mesure joignant les entretoises a une épaisseur de paroi inférieure à 0,5 mm. Ce conduit souple et flexible permet un passage sans effort excessif du conduit de mesure 10 dans le tube de guidage 4 correspondant. Malgré leur rigidité supérieure, les entretoises 30 ne provoquent pas de blocage dans les tubes de guidage 4, à cause de leur longueur réduite (25 mm).

En outre, l'enveloppe externe 14 du conduit 10 est en équipression et ne subit donc pas de contrainte mécanique venant de la pression de l'eau primaire. La gaine centrale 20 du conduit de mesure subit en revanche cette pression mais son faible diamètre et le fait qu'elle soit parfaitement maintenue et protégée à l'intérieur de l'enveloppe 14 du conduit de mesure diminue les risques de détérioration de cette gaine dans laquelle se déplace la sonde mobile.

Grâce à la mise en contact intime des dispositifs de mesure 32 avec l'eau sous pression au niveau des entretoises 30, les mesures sont réalisées dans de très bonnes conditions de sensibilité et de reproductibilité.

Le dispositif suivant l'invention s'adapte sans modification aux configurations actuelles des réacteurs nucléaires. En particulier, il n'est pas nécessaire de modifier les éléments assurant le guidage de l'instrumentation depuis la salle de mesure jusqu'au coeur du réacteur. Ces éléments comportent les tubes de guidage, les structures internes à la cuve constituant des conduits de guidage et les tubes-guides des assemblages combustibles.

Les éléments constituant l'enveloppe externe du conduit en particulier les entretoises peuvent être réalisées sous une autre forme que celle qui a été décrite et dans d'autres matières. Les dimensions de ces éléments et en particulier leur diamètre seront adaptées au type de réacteur et aux structures de guidage associées à ce réacteur.

Les dispositifs de mesure peuvent être d'un type quelconque à partir du moment où ils peuvent être logés à l'intérieur des entretoises, à la périphérie de la gaine centrale de la sonde mobile.

L'enveloppe externe du conduit de mesure peut être percée d'ouvertures, non seulement au niveau des entretoises mais encore dans toute zone souhaitable pour assurer une bonne mise en équipression et un bon mouillage de dispositifs de mesure internes au conduit.

Enfin, le conduit de mesure suivant l'invention s'applique à tout type de réacteur dans lequel il est nécessaire de réaliser des mesures neutroniques ou des mesures physiques, par introduction de dispositifs de forme tubulaire à l'intérieur des assemblages du coeur.

## Revendications

1. Conduit (10) de support et de positionnement de dispositifs de mesure (32) dans le coeur (2) d'un réacteur nucléaire, monté mobile dans un tube de guidage (4) joignant le cuve (1) du réacteur dans laquelle est placé le coeur (2) à un local de mesure (5) et comportant une enveloppe tubulaire externe (14), une gaine centrale (20) disposée coaxialement à l'intérieur de l'enveloppe (14), pour le guidage d'une sonde mobile (12) de mesure de flux neutronique, les dispositifs de mesure (32) placés dans l'enveloppe tubulaire (14) autour de la gaine centrale (20), en des positions fixes réparties suivant la longueur du conduit (10) et des conducteurs (11) s'étendant suivant la longueur du conduit (10) et reliés aux dispositifs de mesure (32), caractérisé par le fait que l'enveloppe tubulaire externe (14) comporte une pluralité de pièces de forme tubulaire ou entretoises (30) usinées intérieurement chacune pour recevoir un ensemble de dispositifs de mesure (32) placé dans une position déterminée suivant la longueur du conduit,

et des tronçons successifs de tube souple dont un tronçon initial (14a) ayant une première extrémité destinée à venir dans le local de mesure (5) et une seconde extrémité reliée à une première entretoise (30), des tronçons intermédiaires reliant chacun deux entretoises successives (30) et un tronçon final prolongeant le conduit au-delà de l'entretoise la plus éloignée du tronçon initial, ouvert à son extrémité libre,

l'enveloppe externe (14) comportant de plus des ouvertures (27, 36) dans sa paroi latérale, réparties en des zones espacées suivant sa longueur.

2. Conduit de mesure suivant la revendication 1, caractérisé par le fait que des ouvertures (36) traversant la paroi de l'enveloppe externe (14) sont prévues au niveau de chacune des entretoises (30) pour assurer le mouillage des dispositifs de mesure (32), par le fluide de refroidissement du réacteur.

3. Conduit de mesure suivant l'une quelconque des revendications 1 et 2, caractérisé par le fait que le tronçon initial (14a) de l'enveloppe externe (14) du conduit de mesure (10) pénètre dans le local de mesure (5) en traversant une buselure d'étanchéité (8) comportant deux joints (16, 16') successifs d'étanchéité glissants entre lesquels est ménagée une chambre (18) reliée à un ajutage (17) d'alimentation en fluide sous pression et que ce tronçon initial comporte des ouvertures (27) dans sa paroi latérale, à une distance de son extrémité débouchant dans le local de mesure (5) sensiblement égale à la hauteur du réacteur nucléaire, de façon que lors du retrait du conduit de mesure par traction et glissement dans la buselure (8), sur une longueur équivalant à la hauteur du coeur, les ouvertures (27) se trouvent dans la chambre annulaire (18) de la buselure (8) permettant ainsi un contrôle de la circulation de fluide dans le conduit (10).

4. Conduit de mesure selon l'une quelconque des revendications 1, 2 et 3, caractérisé par le fait que chacune des entretoises comporte des encoches (35) dans sa paroi latérale débouchant chacune dans un logement (31) d'un dispositif de mesure (32), du métal de soudure étant introduit dans l'encoche (35) pour la fixation des dispositifs de mesure (32) dans l'entretoise (30).

5. Conduit de mesure suivant l'une quelconque des revendications 1 à 4, caractérisé par le fait que l'enveloppe externe (14) est en alliage de zirconium.

**Claims**

1. Pipe (10) for supporting and positioning measuring devices (32) in the core (2) of a nuclear reactor, mounted so as to be movable in a guide tube for connecting the reactor vessel (1) in which the core (2) is situated to a measuring room (5) and comprising a tubular outer casing (14), a central sheath (20) arranged coaxially inside the casing (14), for guiding a movable probe (12) for measuring neutron flux, the measuring devices (32) placed in the tubular casing (14) around the central sheath (20), in fixed positions distributed along the length of the pipe (10) and conductors (11) extending along the length of the pipe (10) and connected to the measuring devices (32), characterised in that the tubular outer casing (14) had a plurality of tubular components or spacers (30) which are eaoh machined internally to receive a set of measuring devices (32) placed in a particular position along the length of the pipe, and successive lengths of flexible tubing, an initial length (14a) of which has a first end for entering the measuring room (5) and a second end connected to a first spacer (30), intermediate lengths each connecting two successive spacers (30) and a final length extending the pipe beyond the spacer which is furthest from the initial length, open at its free end, the outer casing (14) also having openings (27, 36) in its side wall which are distributed in zones spaced along its length.

2. Pipe according to claim 1, characterised in that openings (36) passing through the wall of the outer casing (14) are provided at each of the spacers (30) to ensure that the measuring devices (32) are wetted by the reactor coolant fluid.

3. Measuring device according to claim 1 or 2, characterised in that the initial length (14a) of the outer casing (14) of the measuring pipe (10) enters the measuring room (5) by passing through a sealing duct (8) having two successive sliding leakproof seals (16, 16') between which there is formed a chamber (18) connected to a nozzle (17) for supplying pressurised fluid and this initial length has openings (27) in its side wall, at a distance from its end which opens into the measuring room (5), which is substantially equal to the height of the nuclear reactor, so that when the measuring pipe is withdrawn by pulling and sliding in the duct (8), over a length equivalent to the height of the core, the openings (27) are situated in the annular chamber (18) of the nozzle (8), thus making it possible to monitor the circulation of fluid in the pipe (10).

4. Measuring pipe according to claim 1, 2 or 3, characterised in that each of the spacers has slots (35) in its side wall, each one opening into a recess (31) for a measuring device (32), weld metal being introduced into the slot (35) for fastening measuring devices (32) in the spacer (30).

5. Measuring pipe according to any one of claims 1 to 4, characterised in that the outer casing (14) is made of zirconium alloy.

## Patentansprüche

1. Stütz- und Positionierungsrohr (10) von Meßvorrichtungen (32) in dem Kern (2) eines Kernreaktors, das in einem Führungsrohr (4) beweglich angeordnet ist, das den Behälter (1) des Reaktors, in dem der Kern (2) angeordnet ist, mit einem Meßort (5) verbindet, und das eine äußere rohrförmige Hülle (14), eine zentrale Hülle (20), die koaxial im Inneren der Hülle (14) angeordnet ist, für die Führung einer bewegbaren Sonde (12) zur Messung des Neutronenflusses, die Meßvorrichtungen (32) in der Hülle (14) um die zentrale Hülle (20) in festen Stellungen angeordnet sind, verteilt entlang der Länge des Rohres (10) und Leiter (11) aufweist, die sich entlang der Länge des Rohres (10) erstrecken und mit den Meßvorrichtungen (32) verbunden sind, **dadurch gekennzeichnet,** daß die äußere rohrförmige Hülle (14) eine Mehrzahl von Teilen von rohrförmiger Gestalt oder Abstandshülsen (30) aufweisen, die jeweils innen bearbeitet sind, um eine Anordnung von Meßvorrichtungen (32) aufzunehmen, die in einer vorbestimmten Position entlang der Länge des Rohres angeordnet sind, und

aufeinanderfolgende biegsame Rohrstücke aufweist, von denen ein Anfangsstück (14a) ein erstes Ende aufweist, das dazu dient, in den Meßort (5) zu kommen, und ein zweites Ende aufweist, das mit einer ersten Abstandshülse (30) verbunden ist, wobei Zwischenstücke jeweils zwei aufeinanderfolgende Abstandshülsen (30) verbinden, und ein Endstück das Rohr über die am weitesten vom Ausgangsstück entfernte Abstandshülse hinaus verlängert, das an seinem freien Ende offen ist,

wobei die äußere Hülle (14) darüber hinaus Öffnungen (27, 36) in seiner Seitentrennwand aufweist, die in beabstandeten Zonen entlang ihrer Länge verteilt angeordnet sind.

2. Meßrohr nach Anspruch 1, **dadurch gekennzeichnet,** daß Öffnungen (36), die die Seitenwand der äußeren Hülle (14) durchqueren, auf der Höhe einer jeden der Abstandshülsen (30) vorgesehen sind, um die Benetzung der Meßvorrichtungen (32) durch die Kühlflüssigkeit des Reaktors sicherzustellen.

3. Meßrohr nach einem der Ansprüche 1 oder 2, **dadurch gekennzeichnet,** daß das Ausgangsstück (14a) der äußeren Hülle (14) des Meßrohrs (10) in den Meßort (5) eindringt unter Durchqueren eines Dichtungsüberzugs (8), der zwei aufeinanderfolgende gleitende Dichtungen (16, 16') aufweist, zwischen denen eine Kammer (18) ausgebildet ist, die mit einem Ansatzrohr (17) zur Druckflüssigkeitszufuhr verbunden ist, und daß das Ausgangsstück Öffnungen (27) in einer seitlichen Trennwand mit einem Abstand von seinem Ende aufweist, das in den Meßort (5) mündet, der im wesentlichen gleich der Höhe des Kernreaktors ist, derart, daß beim Zurückziehen des Meßrohres durch Zug und Gleiten in dem Dichtungsstück (8) auf einer Länge, die gleich der Höhe des Kernes ist, die Öffnungen (27) sich in der ringförmigen Kammer (18) des Dichtungsüberzugs (8) befinden, wobei sie so eine Steuerung der Flüssigkeitszirkulation in dem Rohr (10) erlauben.

4. Meßrohr nach einem der Ansprüche 1, 2 oder 3, **dadurch gekennzeichnet,** daß jede Abstandshülse Kerben (35) in seiner seitlichen Trennwand aufweist, die jeweils in eine Aufnahme (31) einer Meßvorrichtung (32) münden, wobei Schweißmetall in die Kerbe (35), für die Befestigung der Meßvorrichtungen (32) in der Abstandshülse (30) eingebracht ist.

5. Meßrohr nach einem der Ansprüche 1 bis 4, **dadurch gekennzeichnet,** daß die äußere Hülle (14) aus einer Zirkonlegierung gebildet ist.

FIG.1

EP 0 272 944 B1

# FIG.2

EP 0 272 944 B1

FIG.3

FIG.6

FIG.5

FIG.6a

FIG.4

EP 0 272 944 B1